# EUROPÄISCHE PATENTSCHRIFT

(11) **EP 0 925 975 B1**
(45) Veröffentlichungstag und Bekanntmachung des Hinweises auf die Patenterteilung: **05.11.2003**
(21) Anmeldenummer: 98123734.0
(22) Anmeldetag: 14.12.1998
(51) Int. Cl.: B60J 5/06, B60J 7/06, B62D 33/04

(54) **Fahrzeugaufbau für Nutzfahrzeuge**
Body structure for commercial vehicle
Carrosserie pour véhicule commercial

(30) Priorität: 19.12.1997 DE 19756617
(43) Veröffentlichungstag der Anmeldung: 30.06.1999
(73) Patentinhaber: Fahrzeugwerk Bernard Krone GmbH, 48480 Spelle (DE)
(72) Erfinder: Krone, Bernard, Dr.-Ing. E.h., 48480 Spelle (DE); Evers, Heinz, 49733 Haren (DE)
(74) Vertreter: Busse & Busse Patentanwälte

(56) Entgegenhaltungen:
- EP-A- 0 168 002
- EP-A- 0 459 879
- GB-A- 2 016 067
- US-A- 3 160 436

## Beschreibung

Die Erfindung betrifft einen Fahrzeugaufbau für Nutzfahrzeuge nach dem Oberbegriff des Anspruchs 1.

Fahrzeugaufbauten dieser Art in einer dauerhaft am Fahrgestell, Anhänger oder Auflieger des Nutzfahrzeuges befestigten Ausführung oder als auf Nutzfahrzeuge aufsetzbare Container oder Wechselbrücken zeichnen sich durch ihre günstigen Be- und Entlademöglichkeiten durch Verschieben der Schiebeplanen aus, wodurch ein gezielter Zugriff auf sämtliche Bereiche des Ladesraums möglich ist.

Nachteilig bei vorgenannten Fahrzeugaufbauten ist lediglich, daß durch die Flexibilität der Plane diese auch in Schließstellung des Fahrzeugaufbaus im Bereich ihrer geführten Kante von den starren Teilen des Fahrzeugaufbaus abgezogen werden kann. Daher sind diese Fahrzeugaufbauten nicht gesichert gegen unbefugten Zugriff zum Laderaum und erfüllen auch nicht die für bestimmte unter Zollverschluß stehende grenzüberschreitende Warenverkehre erforderlichen Zollsicherheitskriterien.

Aus dem DE-GM 296 08 103 ist ein gattungsgemäßer Fahrzeugaufbau bekannt, dessen Plane im Bereich ihrer geführten Kante mit einem Versteifungsbesatz versehen ist, der in Schließstellung des Fahrzeugaufbaus nach oben bereichsweise in das Führungsprofil hineingezogen wird und der in definierten Abständen vertikale Faltlinienbereiche zum Falten der Plane aufweist. Diese Ausgestaltung verhindert zwar einen unbefugten Zugriff auf den Laderaum, ist jedoch mechanisch aufwendig und schränkt die Flexibilität der Schiebeplane durch die vordefinierten Faltlinienbereiche erheblich ein.

Die Erfindung befaßt sich mit dem Problem, einen gattungsgemäßen Fahrzeugaufbau anzugeben, der auf mechanisch einfache und zwischen Öffnungs- und Schließstellung leicht zu variierende Art in der Schließstellung einen unbefugten Zugriff auf den Laderaum verhindert.

Erfindungsgemäß wird dieses Problem durch einen Fahrzeugaufbau mit den Merkmalen des Anspruchs 1 gelöst.

Durch die zugsteife, druckflexible Ausgestaltung des Spannelementes bietet dieses in Schließstellung des Fahrzeugaufbaus durch seine Verspannung in einen eine Durchgriffsicherung aufweisenden Spannraum eine nicht ohne sichtbare Schäden manipulierbare Sicherung gegen unbefugten Zugriff auf den Laderaum, während die Schiebeplane in Öffnungsstellung durch das Spannelement hinsichtlich ihrer Flexibilität nicht eingeschränkt ist. Diese Ausgestaltung ist dabei mechanisch einfach und unproblematisch bedienbar.

Der Spannraum kann durch die verschiedensten Elemente oder Elementgruppen gebildet werden, die einerseits ein Verspannen des Spannelements in diesen Raum hinein ermöglichen und andererseits eine Durchgriffssicherung gegen unbefugten Zugriff auf den Laderaum bilden.

Weitere Vorteile und Einzelheiten ergeben sich aus den Unteransprüchen und dem in der Zeichnung dargestellten Ausführungsbeispiel der Erfindung, das im folgenden erläutert wird; es zeigen:
- Fig. 1: eine perspektivische Ansicht eines erfindungsgemäßen Fahrzeugaufbaus in Schließstellung,
- Fig. 2: den hinteren.Bereich des Gegenstandes nach Fig. 1 in Öffnungsstellung,
- Fig. 3: einen Schnitt durch einen Außenbaum des Gegenstandes nach Fig. 1 mit angrenzenden Schiebeplanen,
- Fig. 4: eine andere Ausführungsform des Gegenstandes nach Fig. 3,
- Fig. 5: teilweise, eine vergrößerte Ansicht des Bereichs V in Fig. 1,
- Fig. 6: teilweise, eine vergrößerte Ansicht des Bereiches VI in Fig. 1 und
- Fig. 7: teilweise im Schnitt eine Verspannungseinrichtung für die Unterkante der Seitenplanen.

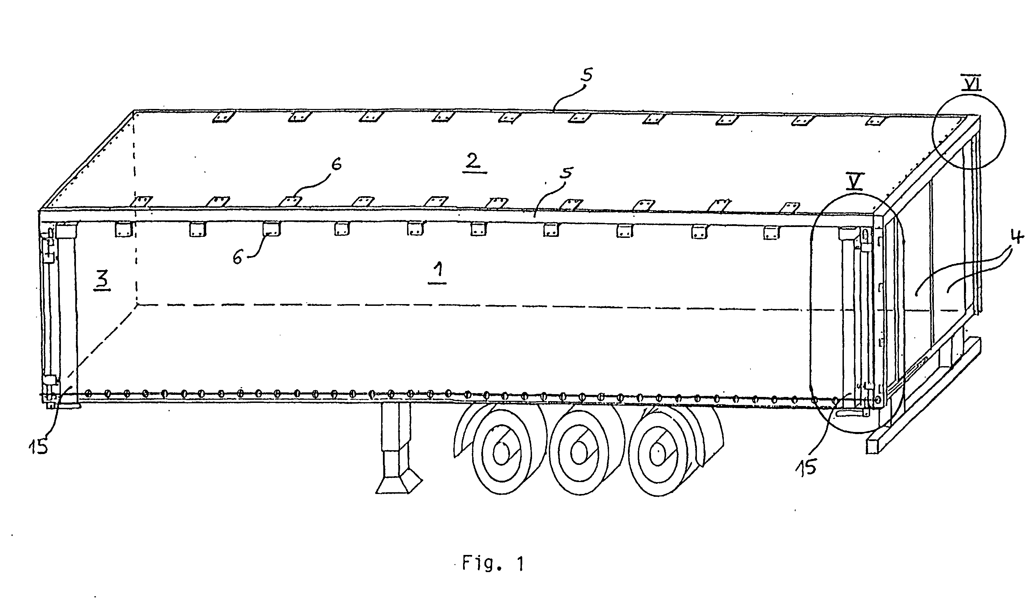

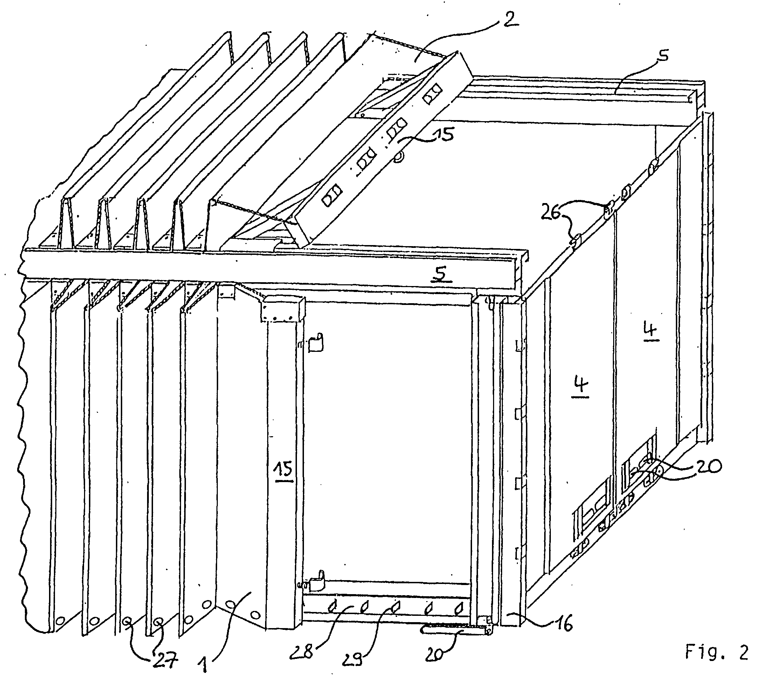

Der in Fig. 1 dargestellte Fahrzeugaufbau ist auf einem Sattelauflieger für Lastkraftwagen angeordnet. Er weist beidseitig flexible Seitenplanen 1, eine ebenfalls flexible Dachplane 2, eine starre Stirnwand 3 und zwei verschwenkbare Hecktüren 4 auf. Die Seitenplanen 1 sind an ihrer jeweiligen Oberkante und die Dachplane 2 an ihren beiden Seitenkanten verschieblich an den Außenbäumen 5 des Fahrzeugaufbaus geführt. Möglich ist auch eine Ausführungsform mit an Ober- und Unterkante erfindungsgemäß ausgestatteten Seitenplanen 1. Die in Fig. 2 dargestellte Öffnungsstellung des Fahrzeugaufbaus zeigt den sich dabei ergebenden Faltenwurf der Seiten- 1 und Dachplane 2.

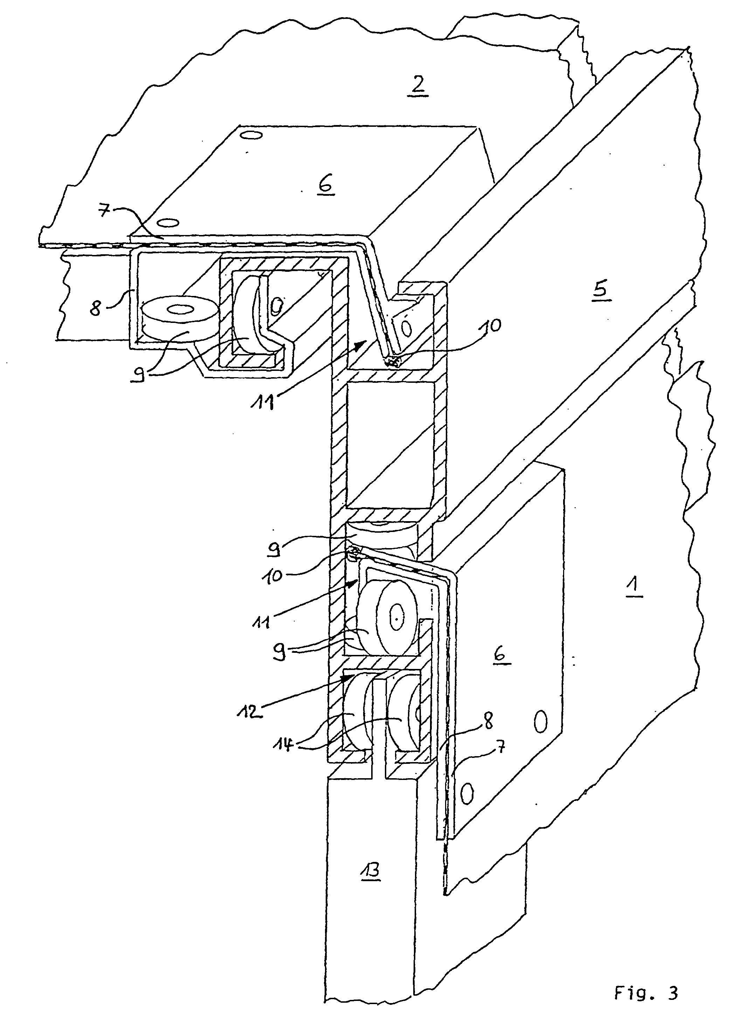

Die Führung der Planen 1, 2 am Außenbaum 5 ist in Fig. 3 dargestellt, die einen Schnitt durch den rechten, in Fig. 1 hinteren Außenbaum in Blickrichtung auf das vordere Ende des Fahrzeugaufbaus zeigt. Die Seitenplane 1 und die Dachplane 2 weisen im Bereich ihrer geführten Kanten in Abständen zueinander angeordnete Führungslaschen 6 auf, mit denen die Planen 1,2 in zugeordneten profilierten Bereichen des Außenbaums 5 geführt werden. Die Anordnung der Führungslaschen 6 ermöglicht eine sichere Führung der Plane 1, 2, ohne deren Flexibilität oder Faltenwurf in der Öffnungsstellung zu beeinträchtigen. Dadurch daß der zwangsläufig vorhandene Außenbaum 5 gleichzeitig als Führungsprofil genutzt wird, erübrigt sich die Anbringung weiterer Führungsprofile in diesem Bereich. Die Führungslaschen 6 sind bei der dargestellten Ausführungsform zweiteilig ausgebildet und schließen die Plane 1, 2 zwischen ihrem äußeren Teil 7 und ihrem inneren Teil 8 fest ein, wobei das äußere Teil 7 und das innere Teil 8 miteinander z.B. durch Vernietung verbunden sind. Das innere Teil 8 und bei den Laschen 6 der Seitenplane 1 auch das äußere Teil 7 tragen Führungsrollen 9, die ein reibungs- und damit kraftarmes Verschieben der Laschen 6 und somit der Planen 1, 2 ermöglichen.

Entlang der geführten Planenkanten sind in die Planen 1, 2 jeweils Stahlseile 10 als Spannelemente eingeschweißt, wodurch eine stabile Verbindung mit der Plane 1, 2 hergestellt wird, ohne deren Struktur zu schwächen und damit die Reißfestigkeit einzuschränken. Die Verwendung von Stahlseilen als Spannelemente 10 ist wegen ihrer hohen Zugsteifigkeit bei gleichzeitig großer Druckflexibilität vorteilhaft. In Schließstellung des Fahrzeugaufbaus sind die Spannelemente 10 in mit einer Durchgriffssicherung zum Laderaum versehene Spannräume hineingespannt, die bei dem dargestellten Ausführungsbeispiel durch Taschenprofile 11 im Außenbaum 5 ausgebildet sind.

Die Führungslaschen 6 sind in Richtung auf den Außenbaum 5 zur Planenkante hin abgekröpft ausgebildet und erstrecken sich in den als Taschenprofil 11 ausgebildeten jeweiligen Spannraum hinein. Dadurch wird das Spannelement 10 auch in Öffnungsstellung des Fahrzeugaufbaus im Bereich der Führungslaschen 6 bereits in der für die Schließstellung notwendigen Position im Spannraum gehalten, wodurch ein Verhaken der Plane 1, 2 bei Überführung in die Schließstellung vermieden wird.

In Fig. 3 ist im übrigen eine in ein untenseitiges Profil 12 des Außenbaums 5 eingehängte Seitenrunge 13 erkennbar, die zur flexiblen Beladbarkeit des Fahrzeugaufbaus in dem untenseitigen Profil 12 an Rollen 14 verschieblich geführt ist.

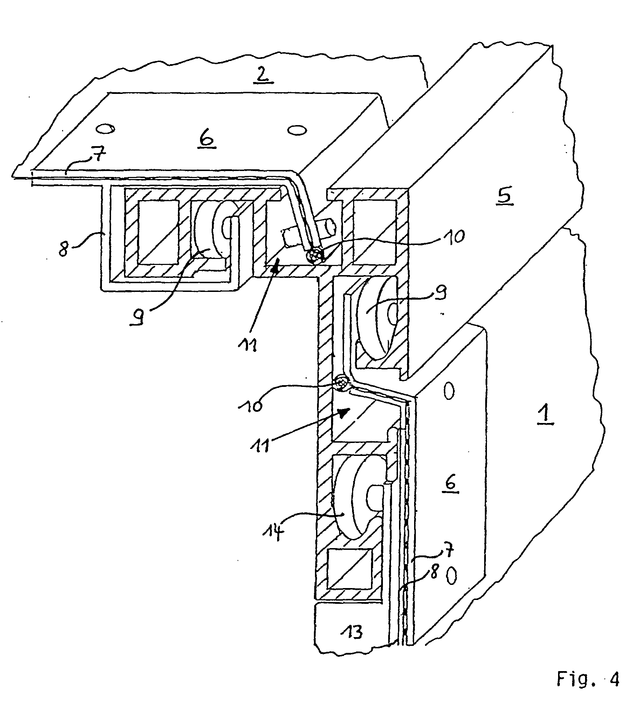

Fig. 4 zeigt eine andere Ausführungsform des Außenbaums 5 sowie der Führungslaschen 6 und der Seitenrunge 13.

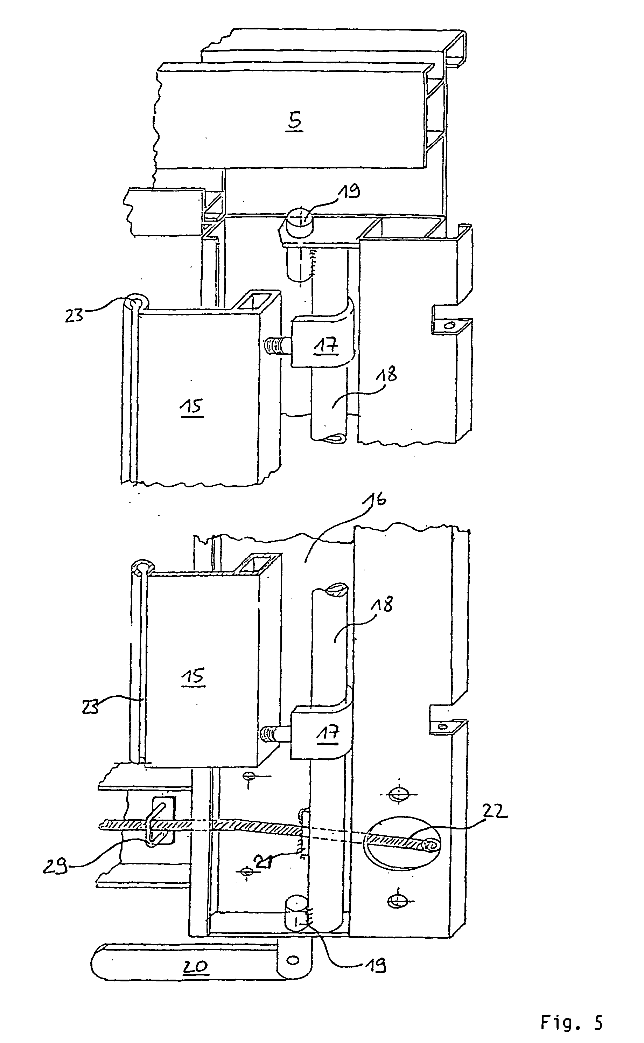

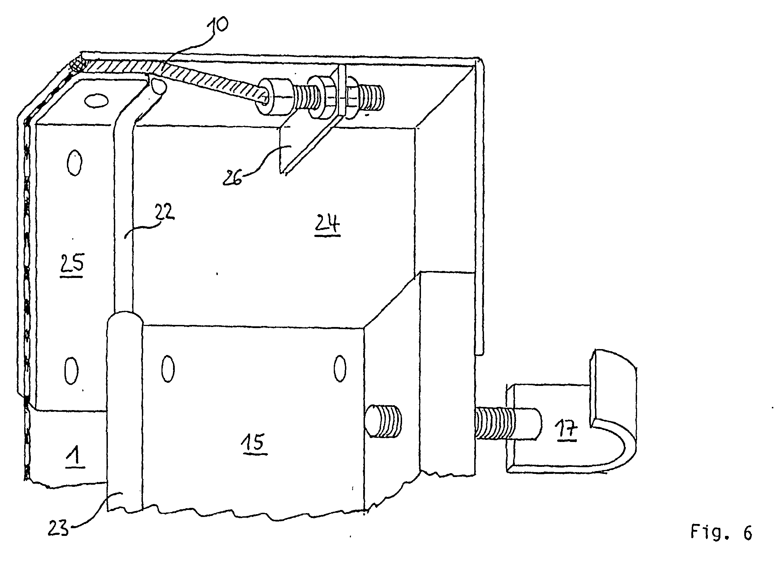

Die nicht geführten, vorderen und hinteren Planenkanten sind mit Verstärkungen 15 versehen und an den starren Elementen des Fahrzeugaufbaus die Plane 1, 2 und die Spannelemente 10 spannend festlegbar. Dies wird im folgenden anhand der Figuren 5 und 6 verdeutlicht. In Fig. 5 ist der Bereich der linken hinteren Eckrunge 16 dargestellt, wobei der mittlere Bereich in der Darstellung herausgeschnitten und einige Elemente, wie die Plane 2 und deren Verbindung zur Verstärkung 15, weggelassen wurden. Die Verstärkung 15 weist wie dargestellt mehrere Haken 17 auf, die in Schließstellung der Plane 1 ein als Spannstange 18 ausgebildetes Spannmittel umgreifen. Die Spannstange 18 ist an ihrem oberen und unteren Ende mit Bolzen 19 verbunden und über diese an der Eckrunge 16 exzentrisch drehbar gelagert. Am unteren Bolzen 19 greift ein Betätigungshebel 20 an, über den die Spannstange 18 verdreht und die erforderliche Spannkraft für die Plane und das Spannelement aufgebracht werden kann. Die Ausbildung des Spannmittels als drehbar gelagerte Spannstange 18 stellt eine einfache, leicht zu betätigende Ausführungsform dar, wobei die von der das Spannmittel betätigenden Person aufzubringende Kraft durch die exzentrische Lagerung der Spannstange 18 herabgesetzt wird.

Die Spannstange 18 weist im unteren Bereich eine Aufnahme 21 für ein Zollsicherungsmittel auf. Bei der dargestellten Ausführungsform wird das Zollsicherungsmittel durch ein Drahtseil 22 gebildet, das durch die ösenförmige Aufnahme 21 hindurchgeführt wird und so eine Verdrehung der Spannstange 18 und damit ein Öffnen der Plane 1 verhindert.

Die Verbindung zwischen Plane 1 und Verstärkung 15 ist am besten in Fig. 6 erkennbar, die die hintere rechte obere Ecke des Fahrzeugaufbaus aus einer Blickrichtung aus dem Inneren des Laderaums zeigt. Die nicht geführte senkrechte Planenkante ist dabei mit einer stangenförmigen stabilen Verdickung 22 ausgestattet, die in eine rundhakenförmig profilierte Rinne 23 der Verstärkung 15 eingeführt ist. Im Eckbereich ist die Plane mit einer mit der Verstärkung 15 fest verbundenen starren Eckkappe 24 über ein mit der Eckkappe 24 vernietetes Klemmblech 25, die Plane 1 klemmend verbunden. Das Spannelement 10 der Plane 1 ist innerhalb der Eckkappe 24 an einem in dieser angeordneten Widerlager 26 verschraubt. Durch diese Anordnung ist die Festlegung des Spannelementes 10 in der Schließstellung des Fahrzeugaufbaus von außen nicht zugänglich und daher von Unbefugten nicht manipulierbar. Die Schraubbefestigung des Spannelementes 10 am Widerlager 26 ermöglicht eine Regulierung und Feineinstellung der das Spannelement 10 beaufschlagenden Spannkraft.

Bei der in den Fig. 1, 2 und 5 dargestellten Ausführungsform wird die Unterkante der Seitenplanen 1 dadurch am Fahrzeugaufbau festgelegt, daß die Plane 1 im Bereich ihrer Unterkante mit Ösen 27 durchbrochen ist, die über am unteren Außenrahmen 28 des Fahrzeugaufbaus angebrachte Haltebügel 29 hinübergeschoben werden. Durch Hindurchziehen des Drahtseils 22 durch die Haltebügel 29 wird die Plane 1 dann im unteren Bereich zollsicher festgelegt.

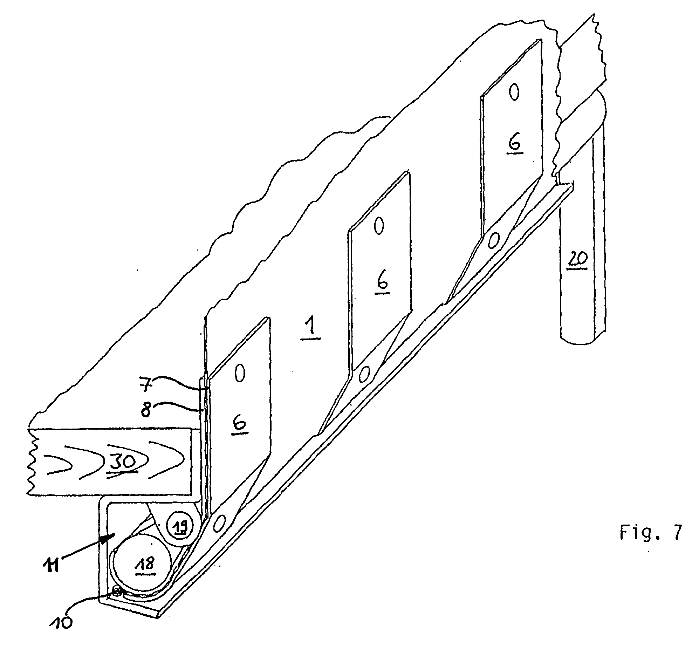

Fig. 7 zeigt eine weitere Möglichkeit, die Planenunterkante festzulegen und die Plane 1 dabei gleichzeitig in Vertikalrichtung zu verspannen. Dazu weist die Plane 1 im Bereich ihrer Unterkante ebenfalls in Abständen zueinander angeordnete Führungslaschen 6 auf, die zweiteilig ausgebildet sind und die Plane 1 zwischen dem äußeren Teil 7 und dem inneren Teil 8 einschließen. Die Spannelemente 6 sind abgekröpft und im unteren Bereich hakenförmig ausgebildet. An der äußersten unteren Kante der Plane 1 ist in diese ein durchgängiges Stahlseil 10 als Spannelement eingeschweißt.

Zur Verspannung der Plane 1 werden die hakenförmigen Enden der Führungslaschen 6 um eine seitlich parallel zum Fahrzeugaufbau angeordnete und an Bolzen 19 verschwenkbar gelagerte Spannstange 18 eingehakt. Die Spannstange 18 wird dann über einen Betätigungshebel 20 in ein unterhalb des Laderaumbodens 30 angeordnetes Taschenprofil 11 hinein in die in Fig. 7 dargestellte Position verschwenkt. Dadurch wird die Plane 1 in Vertikalrichtung gespannt und das als Stahlseil 10 ausgebildete Spannelement in das Taschenprofil 11 überführt. Die untere Spannstange 18 kann genauso wie die seitlichen Spannstangen 18 eine Aufnahme für ein Zollsicherungsmittel aufweisen, wodurch der Fahrzeugaufbau im unteren Bereich ebenfalls zollsicher verschließbar ist.

Rundum zollsicher verschließbar wird der Fahrzeugaufbau, wenn auch die Dachplane 2 an ihren nicht geführten Kanten direkt oder indirekt an von außen nicht zugänglichen Widerlagern 26 am Fahrzeugaufbau festlegbar ist. Diese werden bei der in Fig.2 dargestellten Ausführungsform durch an der Oberkante der Hecktüren 4 angeordnete, über im unteren Bereich der Hecktüren 4 angebrachte Betätigungshebel 20 verschwenkbare Verriegelungsnocken gebildet. Die Verschwenkung der Verriegelungsnocken kann dann wiederum durch eine Blockierung ihrer Betätigungshebel durch das Zollsicherungsmittel verhindert werden.

## Patentansprüche

1. Fahrzeugaufbau für Nutzfahrzeuge, bei dem zumindest ein Teil einer Seiten- oder Dachfläche von einer Schiebeplane (1, 2) eingenommen ist, die zwischen einer im wesentlichen glatten Schließstellung und einer die Seiten- und/oder Dachfläche zumindest teilweise freigebenden, Falten bildenden Öffnungsstellung zumindest im Bereich einer Planenkante verschieblich am Aufbau geführt ist, **dadurch gekennzeichnet, daß** die Plane (1, 2) entlang wenigstens einer geführten Planenkante ein zugsteifes, druckflexibles Spannelement (10) aufweist, das für die Schließstellung in einen mit einer Durchgriffssicherung versehenen Spannraum überführbar ist.

2. Fahrzeugaufbau nach Anspruch 1, **dadurch gekennzeichnet, daß** die Plane (1, 2) zumindest entlang einer weiteren Planenkante ein zugsteifes, druckflexibles Spannelement (10) aufweist, das für die Schließstellung in einen mit einer Durchgriffssicherung versehenen Spannraum überführbar ist.

3. Fahrzeugaufbau nach Anspruch 1 oder 2, **dadurch aekennzeichnet,** daß der Spannraum in einem das Spannelement (10) von einem Laderaum trennenden Taschenprofil (11) ausgebildet ist.

4. Fahrzeugaufbau nach einem der Ansprüche 1 bis 3, **dadurch gekennzeichnet, daß** das Spannelement (10) mit der Plane (12) verschweißt oder in diese eingeschweißt ist.

5. Fahrzeugaufbau nach einem der Ansprüche 1 bis 4, **dadurch gekennzeichnet, daß** das Spannelement (10) ein Stahlseil ist.

6. Fahrzeugaufbau nach einem der Ansprüche 1 bis 5, **dadurch gekennzeichnet, daß** der Laderaum seitlich oben durch Außenbäume (5) begrenzt ist, in denen die Plane (1, 2) geführt ist.

7. Fahrzeugaufbau nach einem der Ansprüche 1 bis 6, **dadurch gekennzeichnet, daß** die Plane (1, 2) wenigstens im Bereich ihrer geführten Kante(n) (9) in Abständen zueinander angeordnete Führungslaschen (6) aufweist.

8. Fahrzeugaufbau nach Anspruch 7, **dadurch gekennzeichnet, daß** die Führungslaschen (6) Führungsrollen (9) aufweisen, die in zugeordneten Führungsprofilen laufen.

9. Fahrzeugaufbau nach Anspruch 7 oder 8, **dadurch gekennzeichnet, daß** die Führungslaschen (6) eine zur Planenkante hin abgekröpfte Form aufweisen.

10. Fahrzeugaufbau nach einem der Ansprüche 1 bis 8, **dadurch gekennzeichnet, daß** das Spannelement (10) an seinen beiden Enden an Widerlagern (26) am Fahrzeugaufbau festlegbar ist.

11. Fahrzeugaufbau nach Anspruch 10 **dadurch gekennzeichnet, daß** die Widerlager (26) in Schließstellung von außen nicht zugänglich sind.

12. Fahrzeugaufbau nach einem der Ansprüche 1 bis 11, **dadurch gekennzeichnet, daß** zumindest ein Ende des Spannelementes (10) mit einem dieses mit Zugkraft beaufschlagenden Spannmittel verbindbar ist.

13. Fahrzeugaufbau nach Anspruch 12, **dadurch gekennzeichnet, daß** das Spannmittel als drehbar gelagerte Spannstange (18) ausgebildet ist.

14. Fahrzeugaufbau nach Anspruch 13, **dadurch gekennzeichnet, daß** die Spannstange (18) exzentrisch gelagert ist.

15. Fahrzeugaufbau nach einem der Ansprüche 12 bis 14, **dadurch gekennzeichnet, daß** das Spannmittel eine Aufnahme (21) für eine ein Öffnen der Plane (1,2) verhindernde Zollsicherung (22) aufweist.

## Claims

1. Vehicle body structure for commercial vehicles, with which at least a part of a side or roof area is occupied by a sliding tarpaulin (1, 2), which is guided in a displaceable manner on the body structure at least in the area of a tarpaulin edge between an essentially smooth closed position and an open position at least partially freeing the side and/or roof area and forming folds, **characterised in that** the tarpaulin (1, 2), along at least one guided tarpaulin edge, has a traction-stiff, pressure-flexible clamping element (10), which for the closed position is transferable into a clamping space provided with a reach-through safety device.

2. Vehicle body structure according to claim 1, **characterised in that** the tarpaulin (1, 2), at least along a further tarpaulin edge, has a traction-stiff pressure-flexible clamping element (10), which for the closed position is transferable into a clamping space provided with a reach-through safety device.

3. Vehicle body structure according to claim 1 or 2, **characterised in that** the clamping space is formed in a pocket profile (11) separating the clamping element (10) from a cargo space.

4. Vehicle body structure according to any one of claims 1 to 3, **characterised in that** the clamping element (10) is welded with the tarpaulin (12) or is welded into the latter.

5. Vehicle body structure according to any one of claims 1 to 4, **characterised in that** the clamping element (10) is a steel rope.

6. Vehicle body structure according to any one of claims 1 to 5, **characterised in that** the cargo space is limited laterally above by external beams (5), in which the tarpaulin (1, 2) is guided.

7. Vehicle body structure according to any one of claims 1 to 6, **characterised in that** the tarpaulin (1, 2) has guide brackets (6) arranged at intervals from one another at least in the region of its guided edge(s).

8. Vehicle body structure according to claim 7, **characterised in that** the guide brackets (6) have guide rolls (9), which run in assigned guide profiles.

9. Vehicle body structure according to claim 7 or 8, **characterised in that** the guide brackets (6) have a shape bent at an angle towards the edge of the tarpaulin.

10. Vehicle body structure according to any one of claims 1 to 8, **characterised in that** the clamping element (10) can be fixed at its two ends to abutments (26) on the vehicle body structure.

11. Vehicle body structure according to claim 10, **characterised in that** the abutments (26) are not accessible from the outside in the closed position.

12. Vehicle body structure according to any one of claims 1 to 11, **characterised in that** at least one end of the clamping element (10) can be connected with clamping means applied to the latter with tractive force.

13. Vehicle body structure according to claim 12, **characterised in that** the clamping means are designed as a rotatably mounted clamping rod (18).

14. Vehicle body structure according to claim 13, **characterised in that** the clamping rod (18) is mounted eccentrically.

15. Vehicle body structure according to any one of claims 12 to 14, **characterised in that** the clamping means have a mounting (21) for a customs security device (22) preventing opening of the tarpaulin (1, 2).

## Revendications

1. Carrosserie de véhicule pour véhicules utilitaires, dans laquelle au moins une partie d'une surface latérale ou de toit est occupée par une bâche coulissante (1, 2) qui est guidée de façon à coulisser sur la carrosserie au moins dans la zone d'un bord de bâche entre une position de fermeture essentiellement unie et une position d'ouverture formant des plis et libérant au moins partiellement la surface latérale et/ou la surface de toit, **caractérisée ce que** la bâche (1, 2) présente un élément tendeur (10) rigide en traction et flexible en compression, qui est transférable dans un espace de tension pourvu d'une protection contre la pénétration, pour la position de fermeture.

2. Carrosserie de véhicule selon la revendication 1, **caractérisée en ce que** la bâche (1, 2) présente au moins le long d'un autre bord de bâche un élément tendeur (10) rigide en traction et flexible en compression, qui est transférable dans un espace de tension pourvu d'une protection contre la pénétration, pour la position de fermeture.

3. Carrosserie de véhicule selon la revendication 1 ou 2, **caractérisée en ce que** l'espace de tension est conformé dans un profilé en forme de poche (11) séparant l'élément tendeur (10) d'un espace de chargement.

4. Carrosserie de véhicule selon l'une quelconque des revendications 1 à 3, **caractérisée en ce que** l'élément tendeur (10) est soudé à la bâche (1, 2) ou est soudé dans celle-ci.

5. Carrosserie de véhicule selon l'une quelconque des revendications 1 à 4, **caractérisée en ce que** l'élément tendeur (10) est un câble en acier.

6. Carrosserie de véhicule selon l'une quelconque des revendications 1 à 5, **caractérisée en ce que** l'espace de chargement est délimité en hauteur latéralement par des longerons extérieurs (5), dans lesquels la bâche (1, 2) est guidée.

7. Carrosserie de véhicule selon l'une quelconque des revendications 1 à 6, **caractérisée en ce que** la bâche (1, 2) présente au moins dans la zone de son (ses) bord(s) guidé(s) (9) des pattes de guidage (6) disposées à distance les unes des autres.

8. Carrosserie de véhicule selon la revendication 7, **caractérisée en ce que** les pattes de guidage (6) présentent des galets de guidage (9) qui roulent dans des profilés de guidage associés.

9. Carrosserie de véhicule selon la revendication 7 ou 8, **caractérisée en ce que** les pattes de guidage (6) présentent une forme coudée en direction du bord de bâche.

10. Carrosserie de véhicule selon l'une quelconque des revendications 1 à 8, **caractérisée en ce que** l'élément tendeur (10) peut être fixé à ses deux extrémités sur des appuis (26) sur la carrosserie de véhicule

11. Carrosserie de véhicule selon la revendication 10, **caractérisée en ce que** les appuis (26) ne sont pas accessibles de l'extérieur en position de fermeture.

12. Carrosserie de véhicule selon lune quelconque des revendications 1 à 11, **caractérisée en ce qu'**au moins une extrémité de l'élément tendeur (10) peut être raccordée à un moyen de mise en tension exerçant une force de traction sur celui-ci.

13. Carrosserie de véhicule selon la revendication 12, **caractérisée en ce que** le moyen de mise en tension est conformé comme une barre de tension (18) positionnée de façon à pouvoir tourner.

14. Carrosserie de véhicule selon la revendication 13, **caractérisée en ce que** la barre de tension (18) est positionnée de façon excentrique.

15. Carrosserie de véhicule selon l'une quelconque des revendications 12 à 14, **caractérisée en ce que** le moyen de mise en tension présente un logement (21) destiné à un dispositif douanier de protection (22) empêchant une ouverture de la bâche (1, 2).
